Europäisches Patentamt

European Patent Office

Office européen des brevets

(11) Veröffentlichungsnummer: **0 258 807 B1**

# (12) EUROPÄISCHE PATENTSCHRIFT

(45) Veröffentlichungstag der Patentschrift: **22.01.92**

(51) Int. Cl.⁵: **G03B 23/14**, G03B 23/04

(21) Anmeldenummer: **87112392.3**

(22) Anmeldetag: **26.08.87**

(54) **Diaprojektor.**

(30) Priorität: **05.09.86 DE 3630238**

(43) Veröffentlichungstag der Anmeldung:
**09.03.88 Patentblatt 88/10**

(45) Bekanntmachung des Hinweises auf die
Patenterteilung:
**22.01.92 Patentblatt 92/04**

(84) Benannte Vertragsstaaten:
**CH DE FR IT LI**

(56) Entgegenhaltungen:
**DE-U- 1 920 848**

(73) Patentinhaber: **Carl Braun Camera-Werk
GmbH
Muggenhofer Strasse 122
W-8500 Nürnberg 80(DE)**

(72) Erfinder: **Mäusbacher, Rainer,
Schweriner Strasse 80
W-8500 Nürnberg 90(DE)**
Erfinder: **Braun, Carl, Jr.
Mörikestrasse 21
W-8500 Nürnberg 20(DE)**

(74) Vertreter: **Göbel, Matthias, Dipl.-Ing.
Pruppacher Hauptstrasse 5-7
W-8501 Pyrbaum-Pruppach(DE)**

## Beschreibung

Die Erfindung betrifft einen Diaprojektor mit einem Projektorgehäuse und einer Bildbühne für Diapositive, bei dem die Bildbühne einen zwischen einer inneren Stellung im Projektorgehäuse und einer äußeren Stellung verschiebbaren Bildbühnenabschnitt zur Aufnahme eines Diapositivs aufweist, wobei der Bildbühnenabschnitt zum Einsetzen oder Herausnehmen eines Diapositivs mittels einer vorgespannten Feder selbsttätig aus der inneren Stellung in die äußere Stellung herausführbar ist und mittels einer Klinke in der inneren Stellung freigebbar fixiert ist.

Bei einem Projektor (DE-U-1920848) ist der das Diapositiv aufnehmende Bildbühnenabschnitt als Schlitten ausgeführt und entgegen der Wirkung von Federkraft in die innere Endstellung bringbar und in dieser mittels einer Klinke arretierbar. Für die Freigabe des Schlittens ist die Klinke mittels eines als Auslöser dienenden Schiebers abzuschwenken. Von Nachteil zeigt sich bei diesen Projektor der für den Schieber notwendige Platzaufwand. Außerdem ermöglicht der Schlitten nur eine labile Halterung des Diapositivs.

Es ist Aufgabe der Erfindung, Maßnahmen zur platzsparenden Ausbildung des verschieblichen Bildbühnenabschnitts im Diaprojektor und eine stabile Halterung des Diapositivs im Bildbühnenabschnitt zu schaffen.

Erfindungsgemäß ist diese Aufgabe dadurch gelöst, daß der verschiebbare Bildbühnenabschnitt rahmenförmig ausgebildet ist, in Verschieberichtung an einem Rahmenteil eine Zahnstange aufweist, die mit einem im Projektorgehäuse drehbar angeordneten Ritzel kämmt, wobei die Feder als Drehfeder ausgebildet ist und das Ritzel vorspannt und daß der Bildbühnenabschnitt mittels der Klinke an einem projektorfesten Vorsprung freigebbar fixiert ist.

Gemäß bevorzugter Ausführung ist vorgesehen, daß die Klinke mit einem Ansatz den projektorfesten Vorsprung in der inneren Stellung hinterfaßt und daß mittels eines im Bildbühnenabschnitt entgegen Federkraft verschieblichen Betätigungsgliedes der Ansatz vom Vorsprung aushebbar ist, wodurch die Fixierung des Bildbühnenabschnitts freigebbar ist. Abgesehen davon, daß so eine platzsparende Ausgestaltung erreicht ist, ist das Diapositiv im Rahmenteil stabil haltbar und durch den Zahnstangentrieb sicher aus der inneren in die äußere Endstellung verbringbar.

Die Erfindung ist anhand eines Ausführungsbeispiels in der Zeichnung verdeutlicht. Es zeigen:

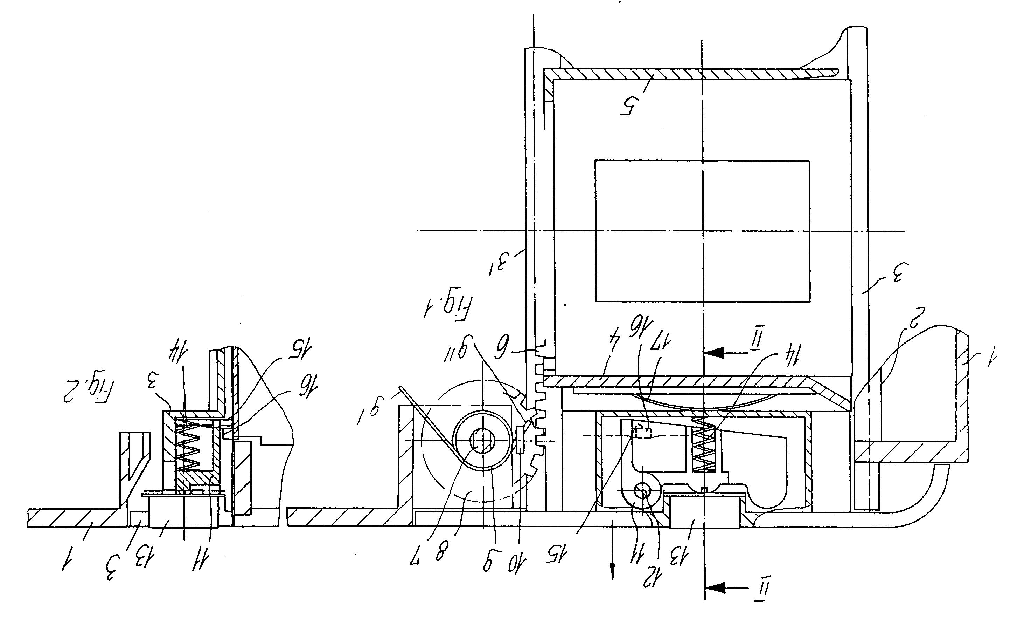

Fig. 1 einen Bildbühnenabschnitt in Vorderansicht, teilweise im Schnitt,

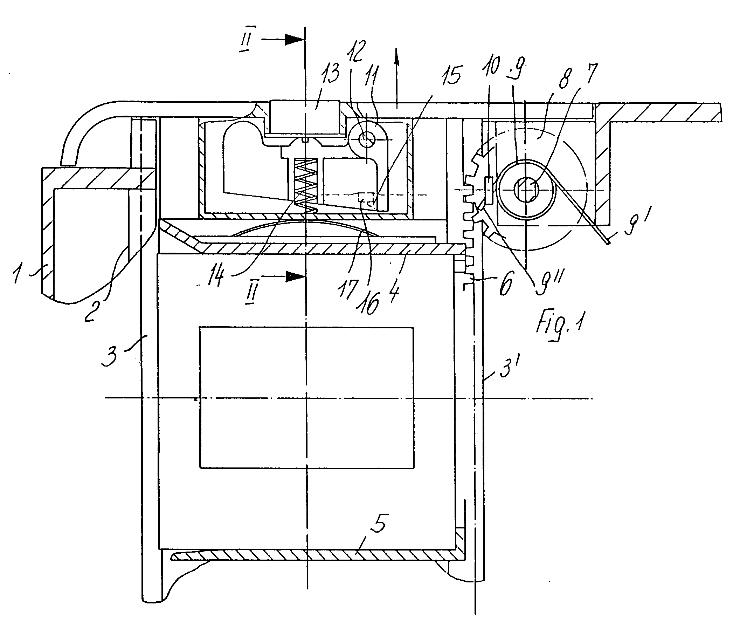

Fig. 2 einen Schnitt nach der Linie II/II der Fig. 1 und

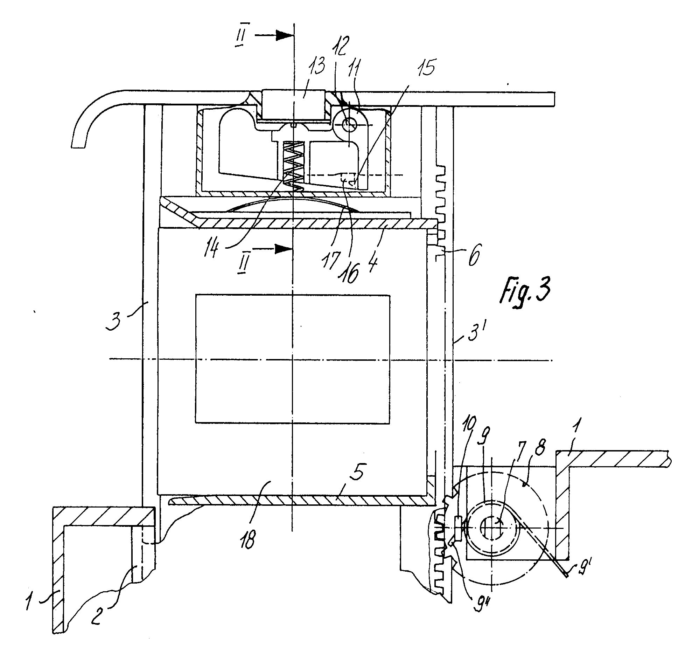

Fig. 3 einen Bildbühnenabschnitt in der äußeren Endstellung in Vorderansicht, teilweise im Schnitt.

In den Figuren ist mit 1 ein Projektorgehäuse bezeichnet, das in Führungen 2 einen verschiebbaren Bildbühnenabschnitt 3 aufnimmt. Der Bildbühnenabschnitt 3 ist in vertikaler Richtung verschiebbar und dient der Aufnahme von Diapositiven 18.

Der Bildbühnenabschnitt 3 ist hierzu mit Prismenführungen 4 und 5 ausgerüstet, wobei die Prismenführung 4 entgegen Federkraft 17 nach oben bewegbar ist. Der Bildbühnenabschnitt 3 ist rahmenförmig gestaltet und nimmt an einem Rahmenteil 3' eine Zahnstange 6 auf, die mit einem im Projektorgehäuse 1 bei 7 gelagerten Ritzel 8 kämmt, das durch eine Drehfeder 9 in Uhrzeigerdrehrichtung vorgespannt drehbar ist. Die Drehfeder 9 stützt sich hierzu mit dem Schenkel 9' auf das Projektorgehäuse 1 und mit dem Schenkel 9'' auf einen Ansatz 10 des Ritzels 8 ab. Weiter weist der Bildbühnenabschnitt 3 eine Klinke 11 auf, die bei 12 abschwenkbar gelagert ist und durch einen Betätigungsknopf 13 entgegen dem Uhrzeigerdrehsinn und der Feder 14 abschwenkbar ist. Die Klinke 11 weist an einer Längsseite einen Ansatz 15 auf, der in den Bewegungsweg eines projektorgehäusefesten Ansatzes 16 einragt und den Bildbühnenabschnitt 3 in der gezeigten inneren Endstellung im Projektorgehäuse 1 hält. Durch Aufdrücken auf den Betätigungsknopf 13 wird die Klinke 11 entgegen der Feder 14 abgeschwenkt und der Ansatz 15 vom Ansatz 16 ausgehoben, wodurch der nunmehr freigegebene Bildbühnenabschnitt 3 durch die Vorspannung der Feder 9 über den Zahnstangenantrieb 6, 8 in die äussere Endstellung bewegt wird. In dieser Stellung kann der Bildbühnenabschnitt 3 mit einem Diapositiv 18 gefüllt und durch Aufdrukken in die gezeigte innere Stellung zurückbewegt werden.

## Patentansprüche

1. Diaprojektor mit einem Projektorgehäuse (1) und einer Bildbühne für Diapositive, bei dem die Bildbühne einen zwischen einer inneren Stellung im Projektorgehäuse (1) und einer äußeren Stellung verschiebbaren Bildbühnenabschnitt (3) zur Aufnahme eines Diapositivs aufweist, wobei der Bildbühnenabschnitt (3) zum Einsetzen oder Herausnehmen eines Diapositivs mittels einer vorgespannten Feder (9) selbsttätig aus der inneren Stellung in die äußere Stellung herausführbar ist und mittels einer Klinke (11) in der inneren Stellung freigebbar fixiert ist, dadurch gekennzeichnet, daß der verschiebbare Bildbühnenabschnitt (3) rahmenförmig ausgebildet ist, in Verschieberichtung an einem Rahmenteil (3') eine Zahnstange (6) aufweist, die mit einem im Projektorgehäuse (1) drehbar angeordneten Ritzel (8) kämmt, wobei die Feder (9) als Drehfeder ausgebildet ist und das Ritzel (8) vorspannt und daß der Bildbühnenabschnitt (3) mittels der Klinke (11) an einem projektorfesten Vorsprung (16) freigebbar fixiert ist.

2. Diaprojektor nach Anspruch 1, dadurch gekennzeichnet, daß die Klinke (11) mit einem Ansatz (15) einen projektorfesten Vorsprung (16) in der inneren Stellung hinterfaßt und daß mittels eines im Bildbühnenabschnitt (3) entgegen Federkraft verschieblichen Betätigungsgliedes (13) der Ansatz (15) vom Vorsprung (16) aushebbar ist, wodurch die Fixierung des Bildbühnenabschnitts (3) freigebbar ist.

## Claims

1. Slide projector, having a projector housing (1) and a magazine for slides, wherein the magazine includes a magazine portion (3), which is displaceable between an inner position in the projector housing (1) and an outer position, for receiving a slide, the magazine portion (3) being automatically transferable from the inner position to the outer position by means of an initially tensioned spring (9) for the insertion or removal of a slide and being secured in the inner position so as to be releasable therefrom by means of a pawl (11), characterised in that the displaceable magazine portion (3) is in the form of a frame and, when viewed with respect to the direction of displacement, has a toothed rack (6) on a frame member (3'), said rack engaging with a pinion (8), which is rotatably disposed in the projector housing (1), the spring (9) being a torsion spring and the pinion (8) being initially tensioned, and in that the magazine portion (3) is secured to a protruding member (16), securely mounted on the projector, so as to be releasable therefrom by means of the pawl (14).

2. Slide projector according to claim 1, characterised in that, in the inner position, the pawl (11) engages with an extension member (15), behind the protruding member (16), which is securely mounted on the projector, and in that the extension member (15) is removable from the protruding member (16) by means of an actuating member (13), which is displaceable in the magazine portion (3) in a direction in opposition to the spring force, whereby the securement of the magazine portion (3) is releasable.

## Revendications

1. Projecteur de diapositives, comportant un boîtier (1) et un réceptacle ou chargeur pour les diapositives, dans lequel ce dernier comprend une partie (3) pour la réception d'une diapositive, déplaçable entre une position interne dans le boîtier (1) du projecteur et une position externe, la partie (3) du chargeur pouvant être ramenée automatiquement de la position interne dans la position externe, au moyen d'un ressort précontraint (9), pour la mise en place ou l'enlèvement d'une diapositive, et étant fixée, de façon amovible, dans la position interne au moyen d'un cliquet (11), caractérisé en ce que la partie mobile (3) du chargeur est réalisée en forme de cadre, présente une crémaillère (6) sur une partie du cadre (3') dans la direction de déplacement, crémaillère qui engrène avec un pignon (8) agencé de façon rotative dans le boîtier (1) du projecteur, le ressort (9) étant réalisé en tant que ressort de torsion et précontraignant le pignon (8), et en ce que la partie (3) du chargeur est fixée, de façon amovible, à une saillie (16) solidaire du projecteur, au moyen du cliquet (11).

2. Projecteur de diapositives selon la revendication 1, caractérisé en ce qu'un appendice (15) du cliquet (11) engage une saillie (16) solidaire du projecteur dans la position interne, et en ce que l'appendice (15) peut être dégagé de la saillie (16) au moyen d'un organe d'actionnement (13) mobile dans la partie (3) du chargeur à l'encontre d'une force élastique, grâce à quoi la fixation de la partie (3) du chargeur peut être libérée.

Fig. 1

Fig. 2

Fig. 1

EP 0 258 807 B1

Fig. 3